# EUROPÄISCHE PATENTANMELDUNG

(11) **EP 2 660 169 A1**
(43) Veröffentlichungstag der Anmeldung: **06.11.2013**
(21) Anmeldenummer: 13165796.7
(22) Anmeldetag: 29.04.2013
(51) Int. Cl.: B65G 47/14, B65G 47/256

(54) **Linearförderer und Zufuhrverfahren für Verbindungselemente**

(30) Priorität: 30.04.2012 DE 102012103783
(71) Anmelder: Böllhoff Verbindungstechnik GmbH, 33649 Bielefeld (DE)
(72) Erfinder: Nobbenhuis, André Herrmann, 33649 Bielefeld (DE)
(74) Vertreter: Heyer, Volker

(57) **Zusammenfassung**

Es ist ein Linearförderer (1) für Verbindungselemente mit einem Schaft und einem Kopf, insbesondere Stanzniete, offenbart. Dieser Linearförderer (1) umfasst ein Zufuhrmodul mit einer Förderstrecke (10) mit mindestens einem ersten geometrischen Orientierungsabschnitt und mindestens einem ersten und einem zweiten geometrischen Aussortierabschnitt.

## Beschreibung

### 1. Gebiet der Erfindung

Die vorliegende Erfindung betrifft einen Linearförderer für stiftähnliche Verbindungselemente mit einem Schaft und einem Kopf, wie Niete, Nägel, Schrauben, Bundmutter und dgl., sowie ein Zufuhrverfahren für eine Mehrzahl ungeordneter Verbindungselemente mit Schaft und Kopf.

### 2. Hintergrund der Erfindung

Um Verbindungselemente unterschiedlichster Konstruktion verarbeiten zu können, müssen diese beispielsweise zu einer Verpackungsmaschine oder einem Werkzeug transportiert werden. Dies erfolgt über Fördervorrichtungen, die die Kleinteile aus einem ungeordneten Vorrat dieser Kleinteile heraus fördern und dann im Wege der Zufuhr zu einem weiteren Gerät vereinzeln und/oder orientieren und/oder aussortieren und/oder gruppieren. Im Ergebnis liegen dann aus einem Reservoir von ungeordneten Verbindungselementen einzelne verarbeitbare Verbindungselemente an einer Verpackungsvorrichtung oder einem Setzgerät vor, um nur einige Beispiele zu nennen.

Die Förderung von Verbindungselementen mithilfe bekannter Vorrichtungen ist teilweise mit Nachteilen behaftet, sodass man nach alternativen Fördermöglichkeiten sucht. So offenbaren beispielsweise US 3,114,448 und US 2,725,971 Rotationsförderer, die topfähnlich aufgebaut sind und über ihre Rotation gespeicherte Verbindungselemente aufwärts transportieren. Aufgrund dieser Rotation des topfähnlichen Rotationsförderers bewegen sich die einzelnen Verbindungselemente entlang einer spiralähnlichen Bahn an der Innenwand des topfähnlichen Rotationsförderers nach oben. Angrenzend an diese Bahn sind beispielsweise unterschiedliche Barrieren angeordnet, die fehlorientierte Verbindungselemente blockieren und in den Rotationsförderer zurück fallen lassen (siehe US 2,725,971).

Da während der Förderung von Verbindungselementen mithilfe eines Rotationsförderers relativ viele Verbindungselemente in den Rotationsförderer zurückfallen, ist die Fördereffizienz eines Rotationsförderers nicht zufriedenstellend. Zudem nutzen sich die Verbindungselemente durch das ständige Zurückfallen in den Rotationsförderer ab, was sich beispielsweise negativ auf eine Oberflächenbeschichtung der später zu verarbeitenden Verbindungselemente auswirkt. Ein weiterer Nachteil besteht darin, dass das wiederholte Fördern zurückgefallener Verbindungselemente mit einem zusätzlichen Energieverbrauch verbunden ist, der nach Möglichkeit vermieden werden soll.

Neben den bereits oben beschriebenen Barrieren zum Aussortieren fehlorientierter Verbindungselemente schlägt EP 1 102 366 B1 eine Düsenkonstruktion vor. Mit dieser Düsenkonstruktion werden fehlorientierte Verbindungselemente aus der Förderstrecke einer Fördereinrichtung geblasen, damit sie beispielsweise in den Rotationsförderer zurück fallen.

Im Vergleich zu Rotationsförderern stellen bekannte Linearförderer ein anderes Prinzip zur Förderung von Verbindungselementen bereit. Bekannte Linearförderer sind beispielsweise in US 2,956,665 und DE 20 2004 018 020 offenbart. Bei Linearförderern werden die Verbindungselemente zunächst aus einem Reservoir zugeführt, während nachfolgend im Linearförderer eine Orientierung der Verbindungselemente und eine weitere Förderung zur Verarbeitungsmaschine oder zum Verarbeitungswerkzeug erfolgen. Derartige Linearförderer beinhalten eine lineare Förderstrecke, in der mindestens eine Barriere oder eine Verjüngung der Förderbahn für eine gezielte Umorientierung und eine die Verarbeitung begünstigende Ausrichtung der Verbindungselemente sorgt. Aber auch diese Linearförderer zeichnen sich durch eine begrenzte Fördereffizienz sowie eine Abnutzung der zu fördernden Verbindungselemente aus. Des Weiteren stellen die bekannten Linearförderer keine zufriedenstellende Sortierung und verarbeitungsfreundliche Anordnung der zu fördernden Verbindungselemente bereit.

Es ist daher die Aufgabe vorliegender Erfindung, einen Linearförderer für Verbindungselemente bereitzustellen, der die Nachteile des Standes der Technik überwindet. Eine weitere Aufgabe vorliegender Erfindung besteht darin, ein entsprechendes Zufuhrverfahren für Verbindungselemente bereitzustellen, dass eine im Vergleich zum Stand der Technik optimierte Förderung der Verbindungselemente gewährleistet.

### 3. Zusammenfassung der Erfindung

Die obigen Aufgaben werden durch einen Linearförderer gemäß dem unabhängigen Patentanspruch 1 sowie durch ein Zufuhrverfahren gemäß dem unabhängigen Patentanspruch 11 gelöst. Vorteilhafte Ausgestaltungen und Weiterentwicklungen vorliegender Erfindung gehen aus der folgenden Beschreibung, den begleitenden Zeichnungen sowie den anhängenden Patentansprüchen hervor.

Der erfindungsgemäße Linearförderer dient dem Fördern von Verbindungselementen mit einem Schaft und einem Kopf, wie Niete, Nägel, Schrauben, Bundmutter und dgl. Dieser Linearförderer weist die folgenden Merkmale auf: ein Zufuhrmodul, mit dem eine Mehrzahl der Verbindungselemente aus einem Reservoir einer linearen Förderstrecke zuführbar sind, und in dem die Förderstrecke in einer Förderrichtung der Verbindungselemente hintereinander angeordnet und unterschiedlich geformt mindestens einen ersten geometrischen Orientierungsabschnitt umfasst, sodass die einzelnen Verbindungselemente während eines Durchlaufs durch den mindestens einen Orientierungsabschnitt lagerichtig ausrichtbar sind, und danach mindestens einen ersten und einen zweiten geometrischen Aussortierabschnitt, sodass fehlausgerichtete Verbindungselemente während eines Durchlaufs durch den mindestens ersten und zweiten Aussortierabschnitt von der Förderstrecke entfernbar sind.

Der erfindungsgemäße Linearförderer für Verbindungselemente mit einem Schaft und einem Kopf baut auf dem Grundprinzip bekannter Linearförderer auf. Im Unterschied zu bekannten Linearförderern, die eine gleichförmige geradlinige Förderstrecke in Kombination mit einzelnen Barrieren für die zu fördernden Kleinteile nutzen, ist die Förderstrecke des erfindungsgemäßen Linearförderers in unterschiedlichen Abschnitten unterschiedlich geformt. Diese unterschiedlichen Abschnitte des Linearförderers sind einerseits an die Form des zu fördernden Verbindungselements angepasst. Des Weiteren sind diese Abschnitte in ihrer Form derart ausgebildet, dass allein die Schwerkraft in Kombination mit der Bewegung des Verbindungselements in Förderrichtung zu einem selbstständigen Orientierungs-und/oder Sortiervorgang führt.

Die unterschiedliche geometrische Formgebung in den einzelnen Abschnitten der Förderstrecke führt zu einer Verlagerung des Schwerpunkts vorzugsweise jedes einzelnen Verbindungselements, sodass bei einer Fehlanordnung des Verbindungselements in Bezug auf die weitere Förderung dieses Verbindungselements diese Schwerpunktsverlagerung zu einem selbstständigen Verlassen der Förderstrecke durch das Verbindungselement führt. Dabei wird zunächst die Förderstrecke für eine Umorientierung oder passenden Ausrichtung der Verbindungselemente genutzt, anstelle dass die Verbindungselemente sehr früh von der Förderstrecke aussortiert werden. Auf diese Weise wird die Zahl der lagerichtig weiterbeförderten Verbindungselemente erhöht, was gleichzeitig die Fördereffizienz des erfindungsgemäßen Linearförderers im Vergleich zum Stand der Technik steigert.

Die zu fördernden Verbindungselemente werden aus einem Reservoir dem Linearförderer zugeführt. Dies kann beispielsweise über ein Förderband oder eine ähnlich bekannte Transportmöglichkeit erfolgen. Um die Transportwege der zu fördernden Verbindungselemente möglichst kurz zu halten, wodurch Zeit und Energie gespart werden und eine Abnutzung der Verbindungselemente reduziert wird, fallen vorzugsweise von der Förderstrecke aussortierte Verbindungselemente nicht in das Reservoir der Verbindungselemente zurück. Stattdessen werden gemäß einer Ausführungsform die aussortierten Verbindungselemente mithilfe eines Rücklaufmoduls aufgefangen, entgegen der Förderrichtung bewegt und der Förderstrecke wieder zugeführt. Um den erfindungsgemäßen Linearförderer kompakt zu gestalten, erstreckt sich eine Rücklaufstrecke des Rücklaufmoduls parallel zur Förderstrecke des Linearförderers, wobei in dieser Rücklaufstrecke die Verbindungselemente in entgegengesetzter Richtung zur Förderrichtung, nämlich in Rücklaufrichtung, transportiert bzw. bewegt werden. Auf dieser konstruktiven Grundlage ist es möglich, das Rücklaufmodul direkt angrenzend zur Förderstrecke anzuordnen, damit die aussortierten und wieder zuzuführenden Verbindungselemente nur kurze Wege zurücklegen müssen.

Um innerhalb der Förderstrecke des Linearförderers zunächst das lagerichtige Orientieren der geförderten Verbindungselemente zu unterstützen, umfasst die Förderstrecke vorzugsweise einen zweiten geometrischen Orientierungsabschnitt, der dem ersten Orientierungsabschnitt in Förderrichtung der Förderstrecke nachgeordnet ist. Aufgrund einer unterschiedlichen Formgebung des ersten und zweiten Orientierungsabschnitts bewirkt die Bewegung der Verbindungselemente durch einen oder beide Orientierungsabschnitte eine Verlagerung des Schwerpunkts des einzelnen Verbindungselements, sofern dieses nicht bereits passend in der Förderstrecke orientiert ist. Wie bereits oben erwähnt worden ist, ist es bevorzugt, dass der erste Orientierungsabschnitt und der erste und zweite Aussortierabschnitt schwerkraftsbetrieben sind, sodass die fehlorientierten Verbindungselemente aufgrund ihrer Schwerkraft während der Bewegung in Förderrichtung orientierbar und/oder aussortierbar sind.

Um die Verbindungselemente in der Förderstrecke des Linearförderers und/oder in der Rücklaufstrecke des Rücklaufmoduls bewegen zu können, sind diese Strecken vorzugsweise mit einem Schwingungsantrieb gekoppelt, sodass die Verbindungselemente in Förderrichtung und entsprechend entgegengesetzt zur Förderrichtung mithilfe von Schwingungen der Förderstrecke bzw. der Rücklaufstrecke bewegbar sind. Es ist ebenfalls bevorzugt, andere Antriebsmöglichkeiten für die Förderstrecke und/oder die Rücklaufstrecke zum Transport der Verbindungselemente als den Schwingförderer einzusetzen. Dies sind beispielsweise ein Magnetförderer, Förderer mittels Mikrowurf oder auch ein Bandförderer für die Rücklaufstrecke.

Die geometrische Gestaltung der einzelnen Orientierungsabschnitte und der Aussortierabschnitte erfolgt in Abstimmung auf die Form und die Dimensionen des zu fördernden Verbindungselements. Basierend auf diese Abstimmung ist gewährleistet, dass sich die Verbindungselemente innerhalb des jeweiligen Abschnitts umorientieren können, ohne dass sie gleich die Förderstrecke verlassen. Um in diesem Zusammenhang die Konstruktion der Förderstrecke flexibel zu gestalten, ist die Förderstrecke vorzugsweise aus Modulen aufgebaut. Diese Module umfassen jeweils eine Teilstrecke der Förderstrecke, so dass in Anpassung an die Form der zu fördernden Verbindungselemente einzelne Bereiche der Förderstrecke austauschbar sind. Daher sind vorzugsweise Module der Förderstrecke vorgesehen für einen oder mehrere der geometrischen Orientierungsabschnitte und/oder einen oder mehrere der geometrischen Aussortierabschnitte. Gemäß dieser Ausführungsform umfasst die Förderstrecke mindestens ein Modul oder eine Mehrzahl von Modulen. Gemäß einer Ausführungsform vorliegender Erfindung besteht der erste Orientierungsabschnitt aus einer halbkreisförmigen Rinne mit einer einseitig überhöhten, vorzugsweise senkrecht zur Förderrichtung auswärts versetzten Seitenwand.

Gemäß einer weiteren bevorzugten Ausführungsform vorliegender Erfindung ist ein zweiter Orientierungsabschnitt dem ersten Orientierungsabschnitt in Förderrichtung des Linearförderers nachgeordnet. Dieser zweite Orientierungsabschnitt besteht vorzugsweise aus einer in ihrem Querschnitt eckigen, gemäß einer Ausführungsform einer rechteckförmigen, Rinne mit einer einseitig überhöhten, vorzugsweise senkrecht zur Förderrichtung auswärts versetzten, Seitenwand, wobei senkrecht zur Förderrichtung der zweite Orientierungsabschnitt zumindest teilweise unterhalb des ersten Orientierungsabschnitts angeordnet ist.

Bei einer lagerichtigen Anordnung des zu fördernden Verbindungselements sorgt die einseitig überhöhte Seitenwand dafür, dass sich das Verbindungselement mit seinem Kopf während der Bewegung in der Förderstrecke an dieser Seitenwand abstützen kann. Auf diese Weise wird das sich bewegende Verbindungselement stabilisiert, sodass diese vorteilhafte Ausrichtung des Verbindungselements in der Förderstrecke erhalten bleibt. Sollte sich das Verbindungselement noch nicht in dieser Ausrichtung befinden, unterstützt die sich verändernde Rinnenform der einzelnen Orientierungsabschnitte eine Lageänderung des Verbindungselements während seiner Bewegung entlang der Förderstrecke. Diese Lageänderung kann einerseits dazu führen, dass das Verbindungselement über die Abstützung des Kopfes an der oben genannten Seitenwand seine Orientierung in der Förderstrecke stabilisiert. Andererseits führt diese Lageänderung zu einer Schwerpunktsverlagerung in eine Position, die ein Herausfallen des Verbindungselements aus der Förderstrecke unterstützt. Auf diese einfache Weise wird die Förderstrecke für lagerichtige orientierte Verbindungselemente freigegeben und die aussortierten Verbindungselemente werden schnellstmöglich der Förderstrecke in ihrem Anfangsabschnitt erneut zugeführt. Zur Ermöglichung dieser erneuten Zufuhr erfolgt vorzugsweise eine Rückführung der aussortierten Verbindungselemente mithilfe des Rücklaufmoduls (siehe oben).

Gemäß einer weiteren bevorzugten Ausführungsform des erfindungsgemäßen Linearförderers besteht der erste Aussortierabschnitt aus einer senkrecht zur Förderrichtung geneigten und im Querschnitt L-förmigen Bahn mit einer überhöhten, vorzugsweise senkrecht zur Förderrichtung auswärts versetzten, Seitenwand. Gemäß einer weiteren bevorzugten Ausführungsform ist der zweite Aussortierabschnitt eine Fortsetzung des ersten Aussortierabschnitts, bei dem eine Breite einer Lauffläche, auf der sich die Verbindungselemente abstützen, im Vergleich zum ersten Aussortierabschnitt quer zur Förderrichtung verringert ist. Zudem ist die eine Seitenwand der Rinne in ihrer Größe reduziert oder es wird vorzugsweise auf sie verzichtet. Auf diese Weise sind fehlorientierte Verbindungselemente allein aufgrund der Schwerkraft aus der Förderstrecke entfernbar.

Da die Orientierungsabschnitte und die Aussortierabschnitte vorzugsweise schwerkraftbetrieben sind, ist die jeweilige Form und Neigung dieser Abschnitte quer zur Förderrichtung derart ausgewählt, dass lagerichtig orientierte Verbindungselemente darin stabil gehalten werden. Sobald einzelne Verbindungselemente jedoch fehlorientiert sind, verlagert sich der Schwerpunkt des einzelnen Verbindungselements über die Stützflächen des jeweiligen Abschnitts hinaus, sodass allein die Schwerkraft in Kombination mit der Bewegung des Verbindungselements entlang der Förderrichtung für eine Umorientierung und/oder ein Entfernen des Verbindungselements von der Förderstrecke sorgt.

Vorliegende Erfindung umfasst zudem das bereits oben genannte Zufuhrverfahren für eine Mehrzahl ungeordneter Verbindungselemente mit einem Schaft und einem Kopf, insbesondere Niete oder Stanzniete, mithilfe des oben beschriebenen Linearförderers. Dieses Zufuhrverfahren weist die folgenden Schritte auf: Zuführen der Mehrzahl ungeordneter Verbindungselemente über ein Zufuhrmodul zum Linearförderer, Bewegen der Mehrzahl von Verbindungselementen auf der Förderstrecke in Förderrichtung, wobei die Verbindungselemente lagerichtig ausgerichtet und/oder aussortiert werden, und weiterleiten lagerichtig ausgerichteter Verbindungselemente zu einer Verarbeitungseinheit. Zudem umfasst das obige Zufuhrverfahren vorzugsweise die folgenden Schritte: Auffangen aussortierter Verbindungselemente in der Rücklaufstrecke, Bewegen der aussortierten Verbindungselemente zu einem Anfangsbereich der Förderstrecke bezogen auf die Förderrichtung und Zuführen der Verbindungselemente zur Förderstrecke.

### 4. Kurze Beschreibung der begleitenden Zeichnung

Die bevorzugten Ausführungsformen vorliegender Erfindung werden unter Bezugnahme auf die begleitende Zeichnung näher erläutert. Es zeigen:
- Figur 1: eine perspektivische Ansicht einer bevorzugten Ausführungsform des erfindungsgemäßen Linearförderers,
- Figur 2: eine perspektivische Ansicht einer Ausführungsform der Förderstrecke des Linearförderers aus Figur 1,

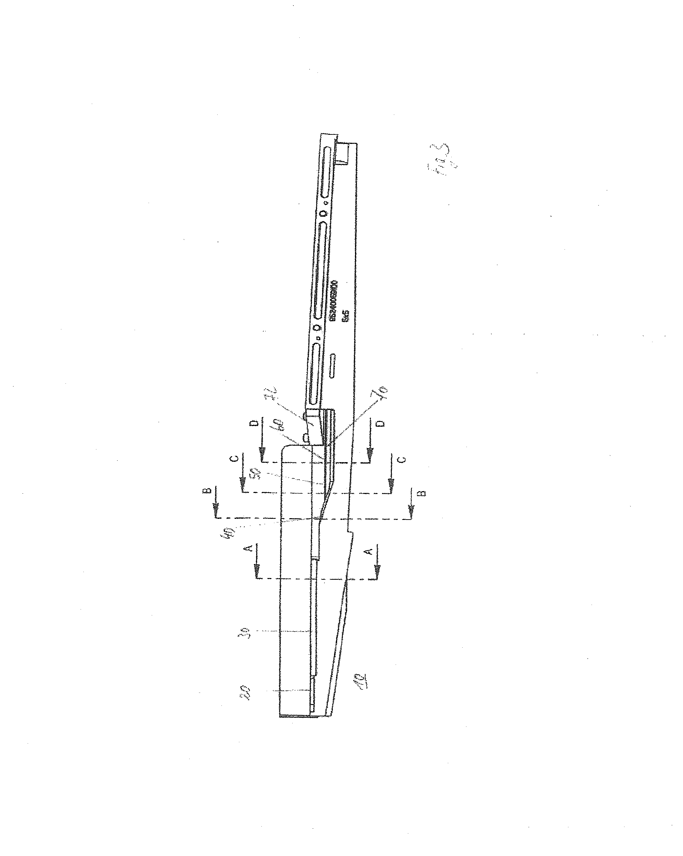

- Figur 3: eine Seitenansicht der Förderstrecke aus Figur 2,
- Figur 4: ein Schnitt entlang der Linie A-A aus Figur 3,
- Figur 5: ein Schnitt entlang der Linie B-B aus Figur 3,
- Figur 6: ein Schnitt entlang der Linie C-C aus Figur 3,
- Figur 7: ein Schnitt entlang der Linie D-D aus Figur 3,

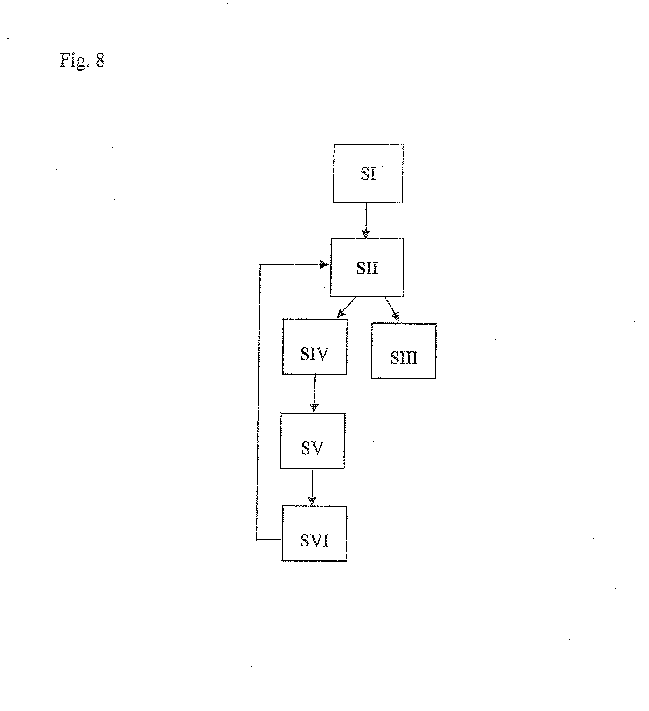

- Figur 8: ein Flussdiagramm einer bevorzugten Ausführungsform des erfindungsgemäßen Zufuhrverfahrens und
- Fig. 9: eine perspektivische Darstellung der bevorzugten Förderstrecke mit unterschiedlich orientierten Verbindungselementen.

### 5. Detaillierte Beschreibung der bevorzugten Ausführungsformen

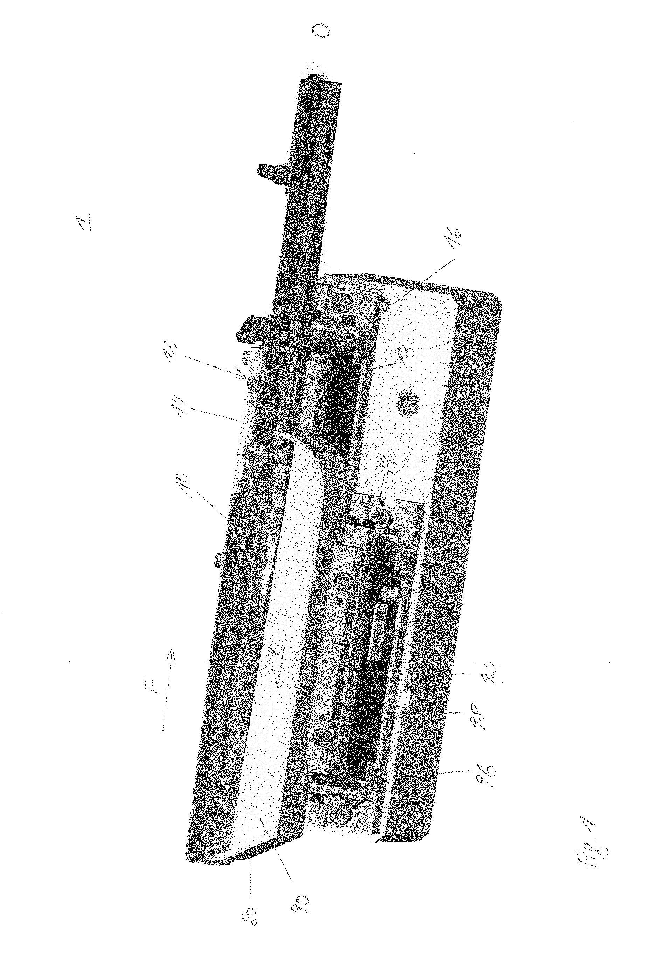

Eine bevorzugte Ausführungsform des erfindungsgemäßen Linearförderers 1 zeigt Figur 1 in einer perspektivischen Ansicht. Der Linearförderer 1 umfasst eine Förderstrecke 10, entlang derer eine Mehrzahl von Verbindungselementen (nicht gezeigt) in einer Förderrichtung F bewegbar ist. Um die Verbindungselemente zu bewegen, wird die Förderstrecke 10 in Vibrationen versetzt. Gemäß einer Ausführungsform wird dazu ein Vibrationsgeber 12 genutzt. Vorzugsweise umfasst der Vibrationsgeber 12 einen Tisch 14 aus magnetischem Material, der auf Federn 16 gelagert ist. Unterhalb des Tisches 14 ist ein Elektromagnet 18 angeordnet, der den Tisch 14 in Vibrationen versetzt. Vorzugsweise sind die Federn 16 entgegen der Förderrichtung F geneigt, sodass die in der Förderstrecke 10 erzeugten Vibrationen die Verbindungselemente in Förderrichtung F bewegen.

Alternativ zur oben beschriebenen Konstruktion sind auch andere Vibrationsgeber 12 für die Förderstrecke 10 einsetzbar, beispielsweise ein Elektromotor mit einer Kulissenwippe, die die Förderstrecke 10 bewegt.

Um die Verbindungselemente (nicht gezeigt) einem Verarbeitungsort 0, beispielsweise einem Werkzeug, einer Verpackungsmaschine oder einer Magaziniervorrichtung, zuzuführen, werden zunächst die Verbindungselemente der Förderstrecke 10 mithilfe eines Zufuhrmoduls zugeführt (Schritt S I). Das Zufuhrmodul (nicht gezeigt) besteht vorzugsweise aus einem Förderband, von dem die Verbindungselemente in einen Anfangsbereich 20 der Förderstrecke 10 fallen. Das Zufuhrmodul führt die Verbindungselemente direkt oder über eine zwischengeschaltete Komponente dem Anfangsbereich 20 der Förderstrecke 10 zu, wie unten näher beschrieben ist. Bei einer indirekten Zufuhr werden die Verbindungselemente vorzugsweise der unten beschriebenen Rücklaufstrecke 90 zugeführt.

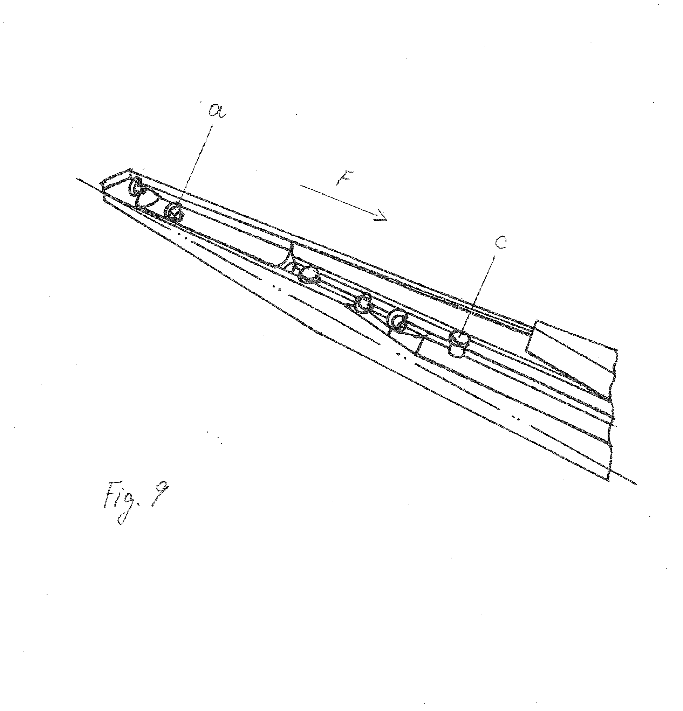

Die Förderstrecke 10 bewegt (Schritt SII und Schritt SIII) die Verbindungselemente zu dem Verarbeitungsort 0. Während dieses Transports werden die zunächst beliebig orientierten Verbindungselemente für die spätere Verarbeitung lagerichtig orientiert oder aus der Förderstrecke 10 entfernt. Um die aus der Förderstrecke 10 entfernten Verbindungselemente über kurze Wege der Förderstrecke 10 erneut zuzuführen, weist der Linearförderer 1 vorzugsweise eine Rücklaufstrecke 90 auf. Die Rücklaufstrecke 90 ist parallel zur Förderstrecke 10 angeordnet und fängt die aussortierten Verbindungselemente auf (Schritt SIV). Sie bewegt (Schritt SV) die aussortierten Verbindungselemente in Rücklaufrichtung R zum Anfangsbereich 20 der Förderstrecke 10, so dass sie derart der Förderstrecke 10 wieder zugeführt werden. Zum Auffangen der aussortierten Verbindungselemente ist die Rücklaufstrecke 90 vorzugsweise unterhalb der Förderstrecke 10 angeordnet. In Abhängigkeit von der Handhabung der Verbindungselemente sind unterschiedliche Höhenunterschiede zwischen Förderstrecke 10 und Rücklaufstrecke 90 einstellbar. Ein bevorzugtes Höhenniveau der Rücklaufstrecke 90 im Vergleich zum Höhenniveau der Förderstrecke 10 ist durch die Strich-Punkt-Linie in Fig. 9 dargestellt.

In gleicher Weise wie die Förderstrecke 10 wird die Rücklaufstrecke 90 über einen Vibrationsgeber 92 angetrieben, der die Rücklaufstrecke 90 in Vibrationen versetzt und dadurch die Verbindungselemente in Rücklaufrichtung R bewegt. Der Vibrationsgeber 92 umfasst vorzugsweise einen Tisch 94, Federn 96 und einen antreibenden Elektromagneten 98, deren Zusammenwirken oben bereits in Verbindung mit dem Antrieb der Förderstrecke 10 beschrieben worden ist. Die Federn 96 sind hier aber in Förderrichtung F geneigt, um die Verbindungselemente in Rücklaufrichtung R bewegen zu können. Zudem ist die Rücklaufstrecke 90 in Rücklaufrichtung R aufwärts geneigt angeordnet, um ein Gefälle der Förderstrecke 10 auszugleichen und die Verbindungselemente dem Anfangsbereich 20 der Förderstrecke 10 zuführen zu können. Zudem ist bevorzugt die Rücklaufstrecke 90 angrenzend an und unmittelbar unterhalb der Förderstrecke 10 angeordnet, damit aussortierte Verbindungselemente von der Förderstrecke 10 direkt auf die Rücklaufstrecke 90 fallen.

Natürlich ist es ebenfalls bevorzugt, alternativ zur Rücklaufstrecke 90 andere Auffangkomponenten vorzusehen, die die aus der Förderstrecke 10 aussortierten Verbindungselemente auffangen und der Förderstrecke 10 erneut zuführen. So ist es beispielsweise denkbar, die aus der Förderstrecke 10 aussortieren Verbindungselemente dem Zufuhrmodul erneut zu zuführen, sodass von dort die Verbindungselemente wieder an den Anfangsbereich 20 der Förderstrecke 10 oder in die Rücklaufstrecke 90 geliefert werden.

Vorzugsweise ist die Rücklaufstrecke 90 wannenartig ausgebildet mit einer zur Rücklaufrichtung R winklig angeordneten geraden oder abgerundeten Begrenzungswand 80. Bei ihrer Bewegung in Rücklaufrichtung R werden die Verbindungselemente an der Begrenzungswand 80 zum Anfangsbereich 20 der Förderstrecke 10 abgeleitet bzw. umgelenkt, sodass sie wieder im Anfangsbereich 20 der Förderstrecke 10 zugeführt werden (Schritt SVI). Basierend auf dieser Konstruktion ist es daher auch bevorzugt, die Verbindungselemente über das Zufuhrmodul (siehe oben) der Rücklaufstrecke 90 zuzuführen (Schritt SI), damit sie von dort zur Förderstrecke 10 transportiert werden.

Die Verbindungselemente werden mit dem Zufuhrmodul (nicht gezeigt) der Rücklaufstrecke 90 oder der Förderstrecke 10 als Schüttgut, also in beliebiger Orientierung, zugeführt. Daher ist es erforderlich, dass die einzelnen Verbindungselemente während ihrer Bewegung entlang der Förderstrecke 10 und vor dem Erreichen des Verarbeitungsorts 0 lagerichtig orientiert oder aussortiert werden. Andernfalls könnte ein fehlorientiertes Verbindungselement die Förderstrecke 10 oder eine spätere Verarbeitung blockieren, was zu ungewollten Nachteilen führt.

Um die Verbindungselemente während ihrer Bewegung entlang der Förderstrecke 10 lagerichtig orientieren zu können, umfasst die Förderstrecke 10 mindestens einen geometrischen Orientierungsabschnitt 30. Vorzugsweise ist dem ersten Orientierungsabschnitt 30 in Förderrichtung F noch ein weiterer geometrischer Orientierungsabschnitt 40 nachgeschaltet, wobei bereits mit nur einem geometrischen Orientierungsabschnitt 30; 40 eine lagerichtige Orientierung der Verbindungselemente erreichbar ist. Mit dem mindestens einen geometrischen Orientierungsabschnitt 30 und bevorzugt mit zwei geometrischen Orientierungsabschnitten 30, 40 wird erreicht, dass die Mehrzahl der zuzuführenden Verbindungselemente lagerichtig orientiert ist, bevor sie den Verarbeitungsort 0 erreicht. Daher müssen diese Verbindungselemente nicht von der Förderstrecke 10 aussortiert werden.

Um mithilfe der Orientierungsabschnitte 30, 40 eine optimale Wirkung zu erzielen, sind die Orientierungsabschnitte 30, 40 an die Form des Verbindungselements angepasst. Diese Form wird im Weiteren anhand eines Stanzniets als Verbindungselement erläutert, der entlang der Förderstrecke 10 bewegt wird. Ein derartiger Stanzniet umfasst einen Schaft und einen Kopf, wobei der Durchmesser des Kopfes größer ist als der Durchmesser des Schafts des Stanzniets.

Aus dem Zufuhrmodul oder von der Rücklaufstrecke 90 fällt der Stanzniet auf den Anfangsabschnitt 20 der Förderstrecke 10. Der Anfangsabschnitt 20 ist vorzugsweise eben ausgebildet, sodass sich der Stanzniet beliebig anordnen kann. Es ist ebenfalls bevorzugt, den Stanzniet direkt dem Orientierungsabschnitt 30 zuzuführen.

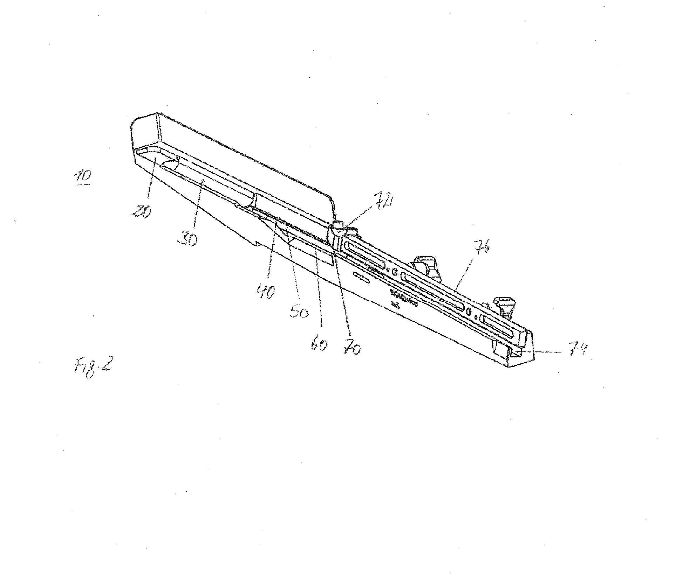

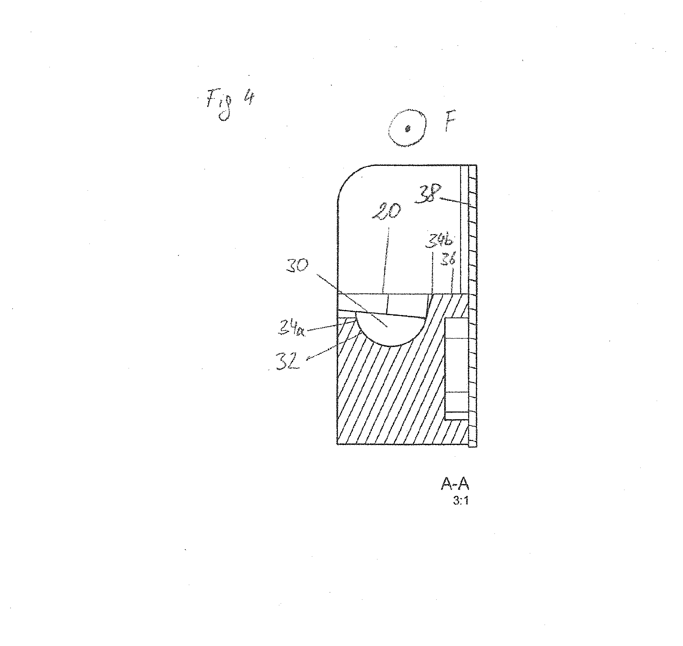

Der Orientierungsabschnitt 30 ist vorzugsweise in Form einer Rinne 32 ausgebildet. Wie man anhand der Schnittdarstellung in Figur 4 erkennen kann, die einen Schnitt durch die Förderstrecke 10 entlang der Linie A-A aus Figur 2 wiedergibt, ist eine der Seitenwände 34a, 34b der Rinne 32 überhöht ausgebildet. Die überhöhte Seitenwand 34b geht zudem in einen Absatz 36 über, der eine Stufe angrenzend an die laterale Begrenzung bzw. Seitenwand 38 der Förderstrecke 10 bildet. Vorzugsweise sind die Abmessungen der Rinne 32 an die Abmessungen des Stanzniets angepasst.

Obwohl die Rinne 32 in ihrer Querschnittsform variieren kann, d. h. rund, eckig oder oval ausgebildet ist, ist sie quer zu Förderrichtung F mindestens so breit wie der Kopfdurchmesser des Stanzniets. Für den dem Orientierungsabschnitt 30 direkt oder indirekt zugeführten Stanzniet ergeben sich nun unterschiedliche Orientierungsalternativen (vgl. Fig. 9). Gemäß den Orientierungsalternativen a und b (nicht gezeigt) ist der Stanzniet parallel zur Förderrichtung F in der Rinne 32 anordenbar, wobei der Kopf des Stanzniets in oder entgegen der Förderrichtung F ausgerichtet ist. Des Weiteren ist es möglich, dass der Stanzniet in der Rinne 32 steht und sich der Kopf des Stanzniets an der Seitenwand 38 abstützt (Orientierungsalternative c des Stanzniets). Gemäß der Orientierungsalternative d ist der Stanzniet senkrecht zur Förderrichtung F angeordnet und der Kopf des Stanzniets ragt an der niedrigen Seitenwand 34a gegenüberliegend zum Absatz 36 seitlich über die Seitenwand 34a hinaus (nicht gezeigt).

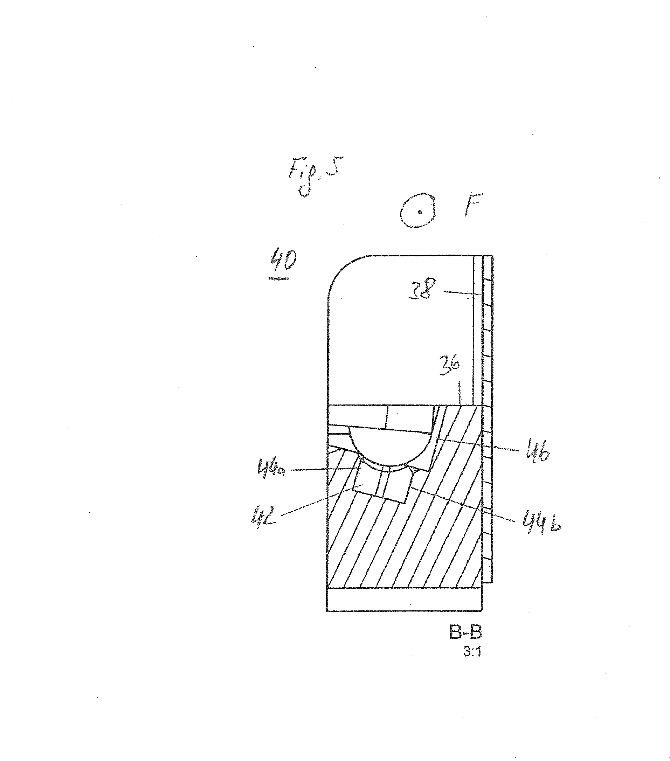

Durch die Vibrationen der Förderstrecke 10 bewegen sich die Stanzniete in die Förderrichtung F. Vorzugsweise bewegen sich die Stanzniete aus dem Orientierungsabschnitt 30 in den Orientierungsabschnitt 40. Es ist ebenfalls bevorzugt, dass die Stanzniete aus dem Zufuhrmodul direkt in den Orientierungsabschnitt 30 oder den Orientierungsabschnitt 40 geleitet werden. Im Vergleich zum Orientierungsabschnitt 30 weist der Orientierungsabschnitt 40 eine senkrecht zur Förderrichtung F vertiefte Rinne 42 auf. Die Rinne 42 ist zudem in ihrem Querschnitt eckig ausgebildet (vgl. Fig. 5), um den Schaft des zu fördernden Stanzniets aufzunehmen. Auf diese Weise werden bereits aufrecht orientierte Stanzniet, d. h. der Kopf des Stanzniets ragt in Figur 5 nach oben, im Orientierungsabschnitt 40 stabilisiert, da sich der Schaft an den Seitenwänden 44a, 44b abstützen kann. Zusätzlich stützt sich der Kopf des Stanzniets am Absatz 36 und/oder der Seitenwand 38 ab. Es ist bevorzugt, für richtig orientierte Verbindungselemente eine zusätzliche Stabilisierung in der Förderstrecke vorzusehen. Zu diesem Zweck ist die Förderstrecke um ihre Längsachse in Richtung der erhöhten Seitenwand 38 geneigt angeordnet. Zudem ist die Wand 46 in ihrer Höhe auf den Schaft des Stanzniets auf der Förderstrecke abgestimmt, so dass sich der Schaft an der Wand 46 abstützt. Eine weitere bevorzugte Stabilisationsmaßnahme besteht darin, den Absatz 36 in seiner Höhe an den Stanzniet anzupassen, so dass die Unterseite des Stanzniets auf dem Absatz 36 aufliegt. Zudem wird vorzugsweise die Tiefe des Absatzes 36 bis zur Seitenwand 38 an den radialen Überstand des Kopfes über die radiale Außenseite des Schafts angepasst. Bei geeigneter Anpassung stützt sich der radiale Außenrand des Kopfes des Stanzniets während der Förderung an der Seitenwand 38 ab. Auf diese Weise werden bereits lagerichtig orientierte Verbindungselemente in ihrer Position stabilisiert, selbst wenn sie beispielsweise Erschütterung oder dgl. ausgesetzt sind.

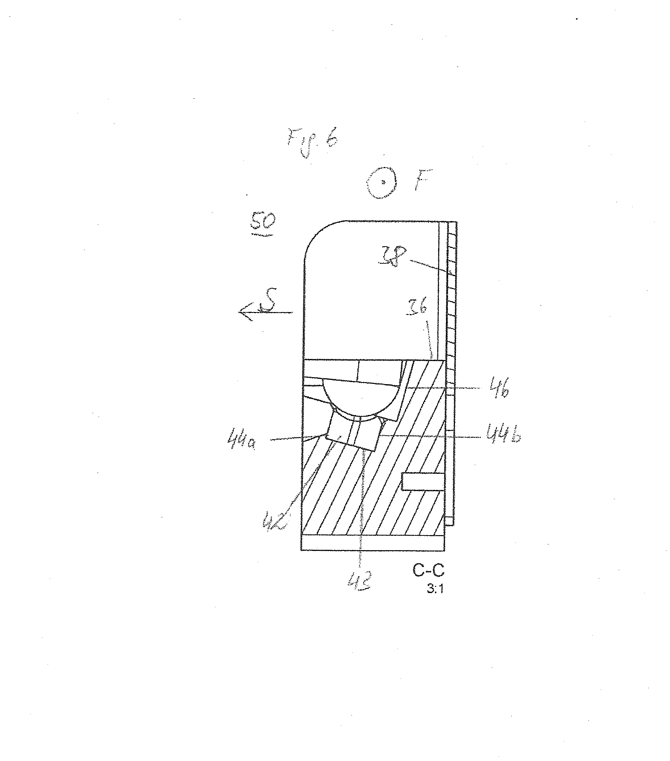

Da die Rinne 42 schmaler als der Kopfquerschnitt des Stanzniets ausgebildet ist, kann nur der Schaft von der Rinne 42 aufgenommen werden, während der Kopf des Stanzniets auf der Höhe des Eingangs der Rinne 42 gehalten wird. Beim Übergang des Stanzniets in einen geometrischen Aussortierabschnitt 50 (vgl. Fig. 6) fallen fehlorientierte Stanzniete aus der Förderstrecke 10 in Richtung S heraus. Im Vergleich zum Orientierungsabschnitt 40 ist die Höhe der Seitenwand 44a der Rinne 42 im Aussortierabschnitt 50 annähernd auf Null reduziert. Auf diese Weise wird der Halt von Stanznieten reduziert, deren Kopf beispielsweise von der Seitenwand 38 abgewandt angeordnet ist.

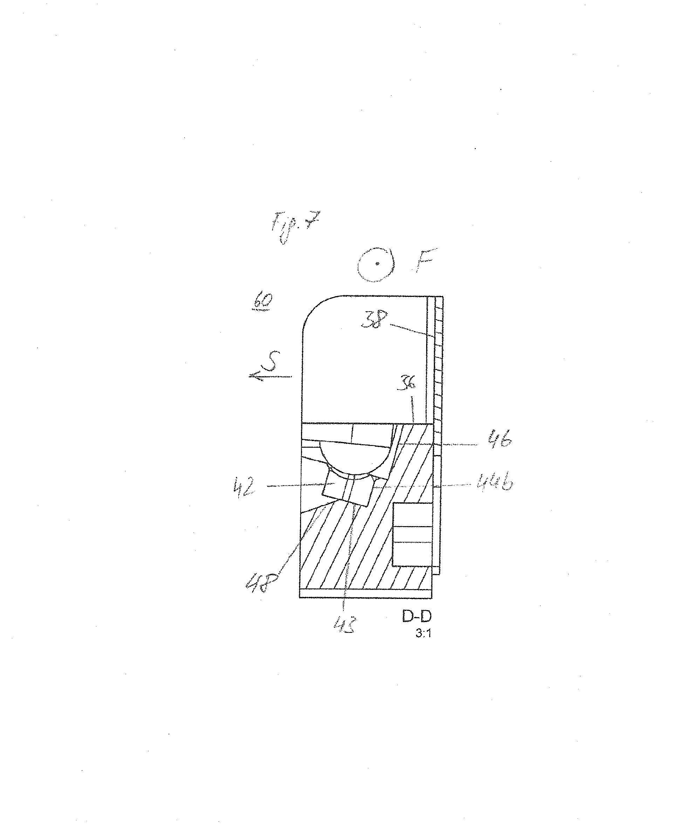

Diese Stanzniete fallen aufgrund der Schwerkraft in Richtung S aus der Förderstrecke 10. Es ist ebenfalls denkbar, dass parallel zur Förderstrecke F orientierte Stanzniete aufgrund der in den Figuren 4-7 nach unten wirkenden Schwerkraft in Richtung S aus der Förderstrecke 10 fallen. Danach werden sie vorzugsweise von der Rückführstrecke 90 oder einem Rückführmodul (nicht gezeigt) aufgefangen und der Förderstrecke 10 erneut zugeführt. Gemäß einer weiteren bevorzugten Ausführungsform werden die Stanzniete in einen weiteren geometrischen Aussortierabschnitt 60 bewegt. Gemäß einer anderen konstruktiven Alternative der Förderstrecke 10 grenzt der Aussortierabschnitt 60 direkt an den Orientierungsabschnitt 30 oder den Orientierungsabschnitt 40 an. Im Vergleich zum Aussorüerabschnitt 50 ist der Boden 43 der Rinne 40 des Aussortierabschnitts 60 bis auf annähernd die Hälfte der Breite der Rinne 40 reduziert ausgebildet. Daraus folgt, dass die Förderstrecke 10 gegenüber der Seitenwand 38 offen ausgebildet ist. Ist ein Schwerpunkt des Stanzniets oberhalb der schiefen Ebene 48 angeordnet, wird der Stanzniet automatisch aus der Förderstrecke 10 aussortiert. Zu diesem Zweck ist die Ebene 48 vorzugsweise in einem Winkel > 90°, weiter bevorzugt in einem Winkel > 100°, bezogen auf die Seitenfläche 38 der Förderstrecke 10 angeordnet.

Aufgrund dieser Konstruktion halten sich im Aussortierabschnitt 60 nur noch Stanzniete, deren Schaft auf der Fläche 43 steht und deren Kopf sich am Absatz 36 und/oder der Seitenwand 38 abstützt. Zudem ist es möglich, dass mehrere Stanzniete übereinander angeordnet sind. Sobald diese eventuell übereinander angeordneten Stanzniete in einen Aussortierabschnitt 70 einlaufen, werden die nicht in der Rinne 42 angeordneten Stanzniete durch die Barriere 72 aus der Förderstrecke 10 aussortiert. Auf diese Weise laufen nur die optimal ausgerichteten Stanzniete in die Rinne 74 ein und werden dort gespeichert. Vorzugsweise wird die Rinne 74 oberhalb durch einen Steg 76 begrenzt, sodass die Stanzniete nur in Förderrichtung F die Rinne 74 verlassen können.

Um eine definierte Abgabe von Stanznieten aus der Rinne 74 zu gewährleisten, ist der Ausgang der Rinne 74 in Förderrichtung F gezielt verschließbar. Zudem wird gemäß einer weiteren Alternative vorliegender Erfindung die Anzahl der in der Rinne 74 gespeicherten Stanzniete mit einem oder einer Mehrzahl von Sensoren überwacht.

Die Rinne 74 verläuft in der in den Figuren dargestellten Ausführungsform geradlinig. In gleicher Weise sind auch gebogene oder abgewinkelte Formen der Rinne 74 bevorzugt, solange sie eine ausreichende Speicherkapazität für passend ausgerichtete Stanzniete aufweist. Die Speicherkapazität der Rinne 74 ist vorzugsweise an das Verarbeitungsvolumen einer weiter verarbeitenden Maschine an der Stelle 0 angepasst. Das bedeutet, dass selbst bei nicht stattfindender Nachlieferung von Stanznieten in der Rinne 74 ausreichend viele Stanzniete in der Rinne 74 vorhanden sind, um die Maschine an der Stelle 0 mit Stanznieten zu versorgen.

Des Weiteren ist es bevorzugt, die Stanzniete innerhalb der Rinne 74 einer weiteren Prüfung mit Hilfe von einem oder mehreren Sensoren zu unterziehen. Sollte die Prüfung zu einem negativen Ergebnis führen, würden diese Stanzniete beispielsweise über eine verschließbare Öffnung aus der Rinne 74 aussortiert werden. Im Rahmen der Prüfung werden die Stanzniete vorzugsweise auf Materialfehler und/oder Maßfehler untersucht. Ist das Ergebnis der Prüfung in Ordnung, werden die Stanzniete weiter transportiert. Ist das Ergebnis der Prüfung nicht in Ordnung, werden die Stanzniete aus der Rinne 74 aussortiert.

Während die lagerichtig orientierten Stanzniete in der Rinne 74 gespeichert oder an eine Verarbeitungseinheit 0 weitergeleitet werden (Schritt SIII), werden die in Richtung S aus der Förderstrecke 10 aussortierten Stanzniete durch die Rücklaufstrecke 90 oder anderweitig aufgefangen (Schritt SIV). Danach werden die aufgefangenen Stanzniete innerhalb der Rücklaufstrecke 90 in Rücklaufrichtung R bewegt (Schritt S V) und der Förderstrecke 10 erneut zugeführt (Schritt SVI). Um die in der Rücklaufstrecke 90 vorhandenen Stanzniete zu erfassen, ist/sind vorzugsweise oberhalb der Rücklaufstrecke 90 ein oder mehrere Sensoren angeordnet. Mithilfe der Sensoren ist sichergestellt, dass einerseits eine ausreichende Anzahl an Verbindungselementen durch die Rücklaufstrecke 90 bewegt wird und das andererseits die Rücklaufstrecke 90 nicht überfüllt wird.

**Bezugszeichenliste**

| | |
|---|---|
| 0 | Verarbeitungsort |
| 1 | Linearförderer |
| 10 | Förderstrecke |
| 12 | Vibrationsgeber |
| 14 | Tisch |
| 16 | Federn |
| 18 | Elektromagnet |
| 20 | Anfangsbereich |
| 30 | Geometrischer Orientierungsabschnitt |
| 32 | Rinne |
| 34a,b | Seitenwand |
| 36 | Absatz |
| 38 | Seitenwand der Förderstrecke |
| 40 | Geometrischer Orientierungsabschnitt |
| 42 | Rinne |
| 44a,b | Seitenwand |
| 50 | Geometrischer Aussortierabschnitt |
| 43 | Boden der Rinne |
| 48 | Schiefe Ebene |
| 60 | Geometrischer Aussortierabschnitt |
| 70 | Geometrischer Aussortierabschnitt |
| 72 | Barriere |
| 74 | Rinne |
| 76 | Steg |
| 80 | Begrenzungswand |
| 90 | Rücklaufstrecke |
| 92 | Vibrationsgeber |
| 94 | Tisch |
| 96 | Feder |
| 98 | Elektromagnet |
| F | Förderrichtung |
| R | Rücklaufrichtung |
| S | Aussortierrichtung |

## Patentansprüche

1. Linearförderer (1) für Verbindungselemente mit einem Schaft und einem Kopf, insbesondere Niete, der die folgenden Merkmale aufweist:
a. ein Zufuhrmodul, mit dem eine Mehrzahl der Verbindungselemente aus einem Reservoir einer linearen Förderstrecke (10) zuführbar sind, und in dem
b. die Förderstrecke (10) in einer Förderrichtung (F) der Verbindungselemente hintereinander angeordnet und unterschiedlich geformt mindestens einen ersten geometrischen Orientierungsabschnitt (30) umfasst, so dass die einzelnen Verbindungselemente während eines Durchlaufs durch den mindestens einen Orientierungsabschnitt (30) lagerichtig ausrichtbar sind, und danach mindestens einen ersten (50) und einen zweiten geometrischen Aussortierabschnitt (60) , so dass fehlausgerichtete Verbindungselemente während eines Durchlaufs durch den mindestens ersten (50) und zweiten Aussortierabschnitt (60) entfernbar von der Förderstrecke (10) sind.

2. Linearförderer (1) gemäß Anspruch 1, der ein Rücklaufmodul aufweist, mit dem aussortierte Verbindungselemente auffangbar, entgegen der Förderrichtung (F) bewegbar und der Förderstrecke (10) zuführbar sind.

3. Linearförderer (1) gemäß Anspruch 1, in dem die Förderstrecke (10) einen zweiten geometrischen Orientierungsabschnitt aufweist, der dem ersten Orientierungsabschnitt in Förderrichtung nachgeordnet ist.

4. Linearförderer (1) gemäß einem der vorhergehenden Ansprüche, in dem der erste Orientierungsabschnitt und der erste und zweite Aussortierabschnitt schwerkraftsbetrieben sind, so dass die Verbindungselemente auf Grund ihrer Schwerkraft während der Bewegung in Förderrichtung orientierbar und/oder aussortierbar sind.

5. Linearförderer (1) gemäß einem der vorhergehenden Ansprüche, in dem die Förderstrecke mit einem Schwingungsantrieb gekoppelt ist, so dass die Verbindungselemente in Förderrichtung mit Hilfe von Schwingungen der Förderstrecke bewegbar sind.

6. Linearförderer (1) gemäß einem der vorhergehenden Ansprüche, in dem der erste Orientierungsabschnitt aus einer, vorzugsweise halbkreisförmigen, Rinne mit einer einseitig überhöhten, vorzugsweise senkrecht zur Förderrichtung auswärts versetzten, Seitenwand besteht.

7. Linearförderer (1) gemäß Anspruch 6, in dem ein zweiter Orientierungsabschnitt dem ersten Orientierungsabschnitt in Förderrichtung nachgeordnet ist und aus einer eckigen, vorzugsweise einer rechteckförmigen, Rinne mit einer einseitig überhöhten, vorzugsweise senkrecht zur Förderrichtung auswärts versetzten, Seitenwand besteht, wobei senkrecht zur Förderrichtung der zweite Orientierungsabschnitt zumindest teilweise unterhalb des ersten Orientierungsabschnitts angeordnet ist.

8. Linearförderer (1) gemäß einem der vorhergehenden Ansprüche, in dem der erste Aussortierabschnitt aus einer senkrecht zur Förderrichtung geneigten und im Querschnitt L-förmigen Bahn mit einer überhöhten, vorzugsweise senkrecht zur Förderrichtung auswärts versetzten, Seitenwand besteht.

9. Linearförderer (1) gemäß einem der vorhergehenden Ansprüche, in dem der zweite Aussortierabschnitt eine Fortsetzung des ersten Aussortierabschnitts ist, bei dem eine Breite einer Lauffläche, auf der sich die Verbindungselemente abstützen, im Vergleich zum ersten Aussortierabschnitt quer zur Förderrichtung verringert ist.

10. Linearförderer (1) gemäß Anspruch 2, in dem das Rücklaufmodul einen Schwingungsantrieb und eine wannenartige Form der linearen Rücklaufstrecke aufweist, die entgegen der Förderrichtung aufwärts geneigt ist.

11. Zufuhrverfahren für eine Mehrzahl ungeordneter Verbindungselemente mit einem Schaft und einem Kopf, insbesondere Niete, mit Hilfe eines Linearförderers gemäß einem der vorhergehenden Ansprüche, das die folgenden Schritte aufweist:
a. Zufüh ren (SI) der Mehrzahl ungeordneter Verbindungselemente über ein Zufuhrmodul zum Linearförderer,
b. Bewegen (SII) der Mehrzahl von Verbindungselementen auf der Förderstrecke in Förderrichtung, wobei die Verbindungselemente lagerichtig ausgerichtet und/oder aussortiert werden, und
c. Weiterle iten (SIII) lagerichtig ausgerichteter Verbindungselemente zu einer Verarbeitungseinheit (0).

12. Verfahren gemäß Anspruch 11 mit dem weiteren Schritt:
Auffangen (SIV) aussortierter Verbindungselemente in einer Rücklaufstrecke (90),
Bewegen (SV) der aussortierten Verbindungselemente zu einem Anfangsbereich (20) der Förderstrecke (10) bezogen auf die Förderrichtung (F) und
Zuführen (SVI) der Verbindungselemente zur Förderstrecke (10).

13. Verfahren gemäß Anspruch 11 mit dem weiteren Schritt:
Zuführen der Mehrzahl von Verbindungselementen über das Zufuhrmodul direkt in die Förderstrecke (10) und/oder indirekt über eine Rücklaufstrecke (90) in die Förderstrecke (10).
